# EUROPÄISCHE PATENTSCHRIFT

(11) **EP 4 185 796 B1**
(45) Veröffentlichungstag und Bekanntmachung des Hinweises auf die Patenterteilung: **08.05.2024**
(21) Anmeldenummer: 21743467.9
(22) Anmeldetag: 12.07.2021
(51) Int. Cl.: F16K 31/122, F16K 1/36, F16K 37/00, F16K 27/02

(54) **VENTILVORRICHTUNG**
VALVE DEVICE
ENSEMBLE SOUPAPE

(30) Priorität: 21.07.2020 DE 102020004369
(43) Veröffentlichungstag der Anmeldung: 31.05.2023
(73) Patentinhaber: GEA Tuchenhagen GmbH, 21514 Büchen (DE)
(72) Erfinder: BURMESTER, Jens, 23883 Grambek (DE); DIRKS, Stephan, 21493 Schwarzenbek (DE)
(74) Vertreter: Hauck Patentanwaltspartnerschaft mbB
(86) Internationale Anmeldenummer: PCT/EP2021/069356
(87) Internationale Veröffentlichungsnummer: WO 2022/017856

(56) Entgegenhaltungen:
- EP-A1- 1 592 905
- WO-A1-2017/076411
- DE-A1- 3 342 405
- US-A- 3 211 418

## Beschreibung

Die Erfindung betrifft eine Ventilvorrichtung nach dem Oberbegriff des ersten Anspruchs.

Fluide mit pulverförmigen Bestandteilen stellen eine Herausforderung für die Prozesstechnik dar. Solche Fluide treten beispielsweise in Sprühtrocknungsanlagen der Lebensmitteltechnik auf. Aufgrund dieses Anwendungsgebietes unterliegen solche Anlagen höchsten Anforderungen an die hygienischen Verhältnisse in ihnen. Um höchste Standards einzuhalten, wird ein so genanntes "cleaning-in-place" (CIP) durchgeführt.

Die Komponenten der Sprühtrocknungs- und Prozessanlage sollen daher so gestaltet sein, dass sich von vorneherein wenig bis keine Ablagerungen in ihnen bilden können, und dass sie während des CIP gut gereinigt werden können. Zu den Komponenten gehören Ventilvorrichtungen zum Schalten des Fluidstromes, beispielsweise Hubventilvorrichtungen.

Ein für diese Anwendung gestaltetes Hubventil mit einem Schließkörper zeigt die WO 2017/076411 A1. Der Schließkörper besitzt an einer Stirnseite eine Kontur, die an eine Kontur des Tanks oder der Leitung angepasst ist, mit dem das Hubventil verbunden ist. Zwischen einer Dichtung, die den Schließkörper umgibt und die mit einem Ventilsitz zusammenwirkt, und dem Tank ist ein den Schließkörper umgebender Spülkanal angeordnet.

Ein kompakt bauendes und gut reinigbares Hubventil stellt die WO 2009/100920 A1 vor. Das Federpaket eines pneumatischen Antriebes für den Schließkörper ist wenigstens abschnittsweise in den Schließkörper integriert. Die WO 2017/088938 A1 stellt vor, wie das Konzept der WO 2009/100920 A1 vorteilhaft in den oben genannten Anwendungen mit pulverförmigen Medien verwendet werden kann.

Aus EP 1 592 905 A1 ist ein Ventil bekannt, mit einem Ventilgehäuse und einem Ventildeckel. Teil des Ventildeckels ist ein fest angeordneter Ventilhalter, an dem ein Ventilelement axial beweglich angeordnet ist. Das Ventilelement ist dazu ausgebildet, in einer Schließstellung mit einem Ventilsitz in Eingriff zu gelangen und so einen Durchgang zwischen einer ersten Öffnung und einer zweiten Öffnung des Ventils zu sperren und im von den Ventilsitz abgehobenen Zustand freizugeben.

US 3211418 A beschreibt ein Absperrventil mit einem Kolbenkörper mit einer konischen Außenseite, die dazu ausgebildet ist, mit einer einen Ventilsitz bildenden konischen Bohrung eines Gehäuses des Ventils zusammenzuwirken. An dem Kolbenkörper ist ein Dichtring gehalten, der in einer Schließstellung des Ventils dicht an der konischen Bohrung anliegt. In einem Ausführungsbeispiel besteht zwischen der konischen Außenseite des Kolbenkörpers und der konischen Bohrung im Schließzustand ein Abstand, sodass die Dichtwirkung im geschlossenen Zustand jederzeit durch den Dichtring gewährleistet ist.

Aus DE 33 42 405 A1 ist ein Hochdruckwasserabsperrventil bekannt mit einem an einem Betätigungsstößel ausgebildeten Dichtkegel, der durch den Fluiddruck und eine federelastische Rückstellkraft gegen einen Dichtsitz im Ventilgehäuse andrückbar ist. Ein in der Schließposition an dem kegelmantelförmigen Dichtsitz zur Anlage gelangender Dichtkegel ist stirnseitiger Bestandteil eines zylindrischen Drosselkolbens und eine Dichtfläche ist endseitig einer zylindrischen Aufnahmebohrung für einen Drosselkolben angeordnet. Durch entsprechende Bemaßung des Außendurchmessers des Drosselkolbens im Vergleich zum Innendurchmesser der Aufnahmebohrung ist ein Drosselspalt zwischen Aufnahmebohrung und Drosselkolben gebildet. Durch den Drosselspalt soll kurz vor dem Aufsetzen des Dichtkegels auf der Dichtfläche sowie unmittelbar nach dem Abheben des Dichtkegels von der Dichtfläche ein Betriebszustand geschaffen werden, bei welchem nahezu kein Fluiddruck im Dichtflächenbereich vorhanden ist. Damit soll die Strömungsgeschwindigkeit im Dichtspalt sehr klein sein, sodass die verschleißfördernde Wirkung des hochgespannten Fluids unwirksam ist.

Die Aufgabe war es daher, eine Ventilvorrichtung mit verbesserten hygienischen Eigenschaften und verbesserter CIP-Fähigkeit zu schaffen.

Gelöst wird diese Aufgabe durch eine Ventilvorrichtung mit den Merkmalen des ersten Anspruchs. Die abhängigen Ansprüche stellen vorteilhafte Weiterbildungen vor.

Ausgangspunkt ist eine Ventilvorrichtung, insbesondere Hubventilvorrichtung, mit einem Gehäuse, einem Ventilsitz, einem bewegbaren Schließkörper, welcher in einer Öffnungsbewegung in eine Offenstellung und in einer Schließbewegung in eine Schließstellung bringbar ist, in welcher Schließstellung der Schließkörper und der Ventilsitz in dichtendem Kontakt stehen, und mit einem druckmittelbeaufschlagbaren Kolben, der in einem Zylinder aufgenommen ist. Diese Ventilvorrichtung ist nun so ausgeführt, dass der Zylinder ein Teil des Schließkörpers ist. Im Gegensatz zu üblichen Pneumatikantrieben ist der Kolben gemäß beanspruchter Lösung ein ruhendes Bauteil während der Zylinder als Teil des Schließkörpers bewegt wird. Damit wird der Antrieb für den Schließkörper, beziehungsweise eine Verstellvorrichtung, in diesen Schließkörper integriert. Die Ventilvorrichtung ist daher kompakt bauend. Daraus folgt eine Verringerung der produktberührenden Fläche des Schließkörpers und wiederum bessere Reinigbarkeit, mithin eine verbesserte CIP-Fähigkeit. Die Ventilvorrichtung ist zudem kostengünstig in der Herstellung. Diese Vorteile entstehen in hohem Maße, da ein mit einem Druckmittel beaufschlagbare Teil des Antriebes in den Schließkörper integriert ist und somit Bauraum für ein Federpaket entfällt.

Eine Weiterbildung betrifft die Führung des Druckmittels zur Beaufschlagung des Kolbens. Eine kostengünstige Lösung sieht vor, dass der Kolben mit einer inneren Hohlstange verbunden ist, die einen Luftkanal beherbergt, der die innere Hohlstange und den Kolben durchsetzt und mit einem ersten Druckraum verbunden ist, welcher von Kolben und Zylinder umgeben ist. Diese Hohlstange kann entlang der Hubachse verlaufen. Die Druckmittelversorgung erfolgt auf diese Weise über ein ruhendes Bauteil, was vorteilhaft einfach in der Umsetzung ist.

Erfindungsgemäß ist weiter vorgesehen, dass sich der Schließkörper durch ein Gehäuseteil erstreckt und ein erstes Gleitlager und ein zweites Gleitlager vorgesehen sind, die an gegenüberliegenden Enden des Gehäuseteils angeordnet sind. Ziel ist es, einen Abstand zwischen den Gleitlagern zu erreichen, der ein Verkippen gegen die Hubachse vermeidet. Andererseits soll der Abstand der Raumbedarf der Ventilvorrichtung nicht unnötig erhöhen. Daher kann dieser Abstand etwa einen Durchmesser des Kolbens oder der Schließkörpers betragen, wobei der Durchmesser in einer Ebene senkrecht zur Hubachse gemessen wird. Vorteilhaft beträgt der Abstand etwa ein Drittel bis die Hälfte einer Länge des Schließkörpers in entlang der Hubachse.

In einer anderen Weiterbildung ist die Ventilvorrichtung so ausgeführt, dass eine Dichtung, die am Schließkörper in einer Nut aufgenommen ist und diese ausfüllt, und ein Ventilsitz halbaxial ausgeführt sind. Diese Gestaltung sorgt für eine verbesserte Zentrierung des Schließkörpers in der Schließstellung des Ventils.

Weiterhin ist erfindungsgemäß zwischen einem Gehäuseteil und dem Schließkörper ein den Schließkörper umgebender Ringkanal angeordnet. Dieser Ringkanal ist mit einem Spül- oder Sperrmedium beaufschlagbar, beispielsweise einem Spülgas wie sterile Luft. Dies erlaubt als Vorteil, Ablagerungen im Bereich des Durchlasses stark zu verringern, beispielsweise in Anwendungen mit pulverförmigen Medien.

Die vorherige Ausgestaltung wird zusätzlich verbessert, indem vom Ringkanal zu einem Anschluss hin zwischen Gehäuseteil und Schließkörper ein Drosselspalt ausgebildet ist. Durch diesen Drosselspalt kann Spül- oder Sperrmedium entgegen dem Produktstrom strömen und so Ablagerung in hohem Maße verringern.

Gemäß einer anderen Weiterbildung der Ventilvorrichtung umfasst diese eine Führungsstange, die sich parallel zu einer Hubachse erstreckt und in einer Ebene, auf der die Hubachse senkrecht steht, wenigstens abschnittsweise von einer am Schließkörper vorgesehenen Platte umschlossen ist. Es wird ein Formschluss zwischen Platte und Führungsstange in einer Umfangsrichtung um die Hubachse geschaffen. Hierdurch wird eine Drehung des Schließkörpers um die Hubachse verhindert. Dies ist beispielsweise für die Ausgestaltung und Abstimmung der Bauteile aufeinander von Vorteil, bei der ungewünschte Spalte zwischen den Bauteilen weitgehend vermieden und gewünschte Spalte zuverlässig eingestellt werden können, beispielsweise der Drosselspalt.

In einer anderen Weiterbildung ist die Ventilvorrichtung so gestaltet, dass ein erstes Gehäuseteil einen ersten Flansch aufweist, welcher mit einem an einem zweiten Gehäuseteil vorgesehen zweiten Flansch zusammengebracht ist, und ein Bolzen vorgesehen ist, der mit jedem der beiden Flansche in Eingriff steht. Dies sichert die räumliche Zuordnung der Bauteile zueinander und verhindert insbesondere eine zueinander verdrehte Montage der Flansche. Auch dies erleichtert die Abstimmung der Bauteile aufeinander und schafft dadurch höhere Genauigkeit und somit bessere hygienische Eigenschaften.

Eine weitere Verbesserung der Ventilvorrichtung wird erzielt, indem eine Stirnseite des Schließkörpers an eine Innenwandung eines Anschlusses fluchtend angepasst, beziehungsweise bündig abschließend, ausgeführt ist. Dies erlaubt es, Schließkörper und Innenwandung in einem Zuge zu reinigen, beispielsweise mit einem Rohrleitungsmolch. Besonders wirkungsvoll ist diese Weiterbildung im Zusammenspiel mit den Weiterbildungen, die eine Verdrehung des Schließkörpers und der Flansche um die Hubachse verhindern.

Eine Einbindung der Ventilvorrichtung in eine Prozessanlage wird verbessert, indem die Ventilvorrichtung eine Sensorik mit einem ersten Stellungssensor und einem zweiten Stellungssensor umfasst, die an sich gegenüberliegenden Enden einer Verschiebungsstrecke des Schließkörpers angeordnet sind.

Anhand eines Ausführungsbeispiels und seiner Weiterbildungen soll die Erfindung näher erläutert werden. Zudem soll die Darstellung der Vorteile vertieft werden.

Es zeigen:
- **Fig. 1:**: Schnitt durch eine Ventilvorrichtung in ihrer Offenstellung;
- **Fig. 2:**: Schnitt durch die Ventilvorrichtung in ihrer Schließstellung;
- **Fig. 3:**: Ansicht des Details X, eines Ventilsitzbereichs der Ventilvorrichtung;
- **Fig. 4:**: Ansicht des Details Y, einer Flanschverbindung der Ventilvorrichtung.

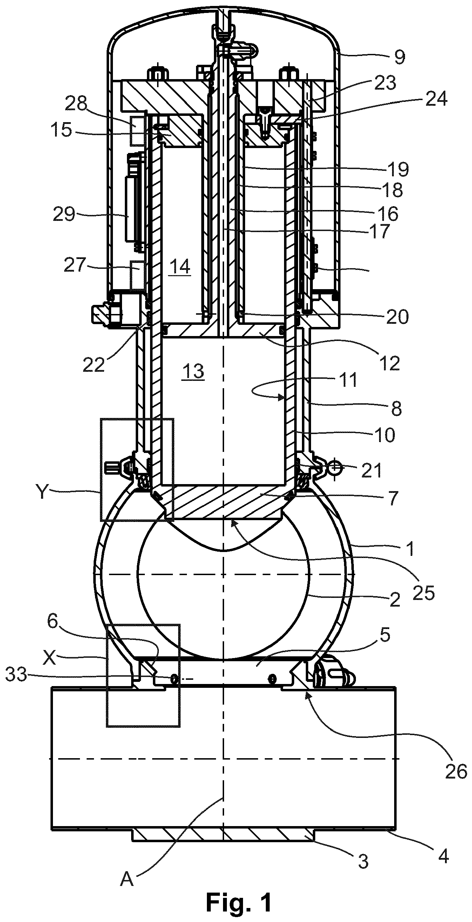

In Fig. 1 ist eine Ventilvorrichtung mit einem mehrteiligen Gehäuse gezeigt. Ein erstes Gehäuseteil 1 weist einen ersten Anschluss 2 auf. In einem zweiten Gehäuseteil 3 ist ein zweiter Anschluss 4 vorgesehen. Zwischen den Anschlüssen 2 und 4 ist ein Durchlass 5 vorgesehen.

Im Durchlass 5 ist ein Ventilsitz 6 angeordnet. Die Ventilvorrichtung besitzt einen Schließkörper 7, der in dichtenden Kontakt mit dem Ventilsitz 6 bringbar ist, um eine Fluidverbindung zwischen ersten und zweitem Anschluss 2 und 4 zu trennen. Durch Auflösen des dichtenden Kontakts ist die Fluidverbindung wieder herstellbar.

Der Schließkörper 7 erstreckt sich durch ein drittes Gehäuseteil 8 der Ventilvorrichtung und ist bis in einen Innenraum einer Haube 9 verschiebbar. Auf einer dem Durchlass 5 abgewandten Seite des Schließkörpers 7 ist in diesem ein Zylinder 10 mit einer Lauffläche 11 vorgesehen. Ein mit der Lauffläche 11 in dichtendem und verschiebbarem Kontakt stehender Kolben 12 unterteilt ein Volumen des Zylinders 10 in einen ersten Druckraum 13 und einen zweiten Druckraum 14. Ein Deckel 15 schließt den Zylinder luftdicht ab.

Der Kolben 12 ist mit einer inneren Hohlstange 16 verbunden, die einen Luftkanal 17 beherbergt, der die innere Hohlstange 16 und den Kolben 12 durchsetzt und mit dem ersten Druckraum 13 verbunden ist. Die innere Hohlstange 16 ist unter Bildung eines Luftspaltes 18 in einer äußeren Hohlstange 19 aufgenommen. Wenigstens eine Bohrung 20 in der äußeren Hohlstange 19 verbindet den Luftspalt 18 mit dem zweiten Druckraum 14.

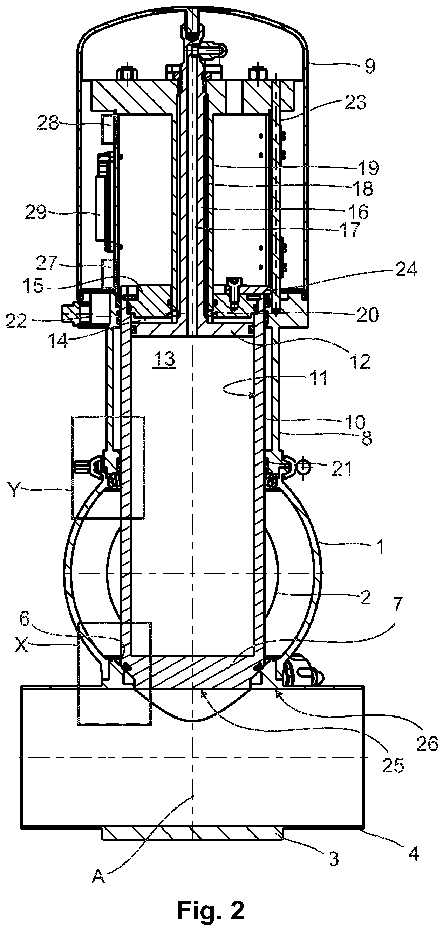

Sobald ein Druckmittel, beispielsweise pneumatische Luft, durch den Luftkanal 17 in den ersten Druckraum 13 gespeist wird und der Druck im ersten Druckraum 13 den Druck im zweiten Druckraum 14 übersteigt, wird der Schließkörper 7 in Richtung des Ventilsitzes 6 bewegt und schließlich mit diesem in dichtenden Kontakt gebracht. Die Ventilvorrichtung befindet sich nun in einer in Fig. 2 gezeigten Schließstellung. Die Fluidverbindung zwischen den Anschlüssen 2 und 4 ist getrennt. Vorzugsweise wird der zweite Druckraum 14 in diesem Schritt entlüftet.

Umgekehrt kann über den Luftspalt 18 und die Bohrung 20 ein Druckmittel dem zweiten Druckraum 14 zugeführt werden. Übersteigt der Druck im zweiten Druckraum 14 den Druck im ersten Druckraum 13, bewegt sich der Schließkörper in die in Fig. 1 gezeigte Offenstellung. Der erste Druckraum 13 kann in diesem Schritt entlüftet werden.

Bei den Bewegungen des Schließkörpers 7 bewegt sich der Zylinder 10 während der Kolben 12 ortsfest bleiben kann, vorzugsweise ortsfest bleibt.

Durch diesen Aufbau ist das zum Verstellen des Schließkörpers 7 notwendige Mittel, auch Antrieb genannt, kompakt in die Ventilvorrichtung integriert. Der Schließkörper 7 ist ein Teil des Antriebs. Dieser Aufbau ist kostengünstig und einfach in Herstellung und Wartung. Ein weiterer Vorteil ist, dass der Schließkörper 7 auf einem großen Durchmesser geführt werden kann, so dass enge Spaltmaße eingehalten werden können, beispielsweise im Bereich des Ventilsitzes 6.

Zur Führung sind ein erstes und ein zweites Gleitlager 21 und 22 vorgesehen, die an gegenüberliegenden Enden des dritten Gehäuseteils 8 angeordnet sind und bandförmig, den Zylinder 10 umschließend, geformt sein können. Eine gute Führung des Schließkörpers 7 wird erreicht, indem die Gleitlager 21 und 22 in Richtung der Hubachse A einen Abstand zueinander aufweisen, der im Bereich eines Durchmessers des Kolbens quer zur Hubachse A gemessen oder eines äußeren Durchmessers des Schließkörpers 7 quer zur Hubachse A gemessen und im Bereich des Zylinders 10 liegt.

Der Schließkörper 7 kann gegen eine Verdrehung um eine Hubachse A gesichert ausgeführt sein. Hierzu kann unter Haube 9 eine Führungsstange 23 vorgesehen sein, die sich parallel zur Hubachse A erstreckt. In einer Ebene, auf der die Hubachse A senkrecht steht, wird diese Führungsstange 23 wenigstens abschnittsweise von einer am Schließkörper 7 befestigten Platte 24 umschlossen, so dass ein Formschluss entsteht, der die Verdrehung der Schließkörpers 7 um die Hubachse unterdrückt, die Bewegung entlang der Hubachse A jedoch erlaubt. In dieser Anordnung ist die Verdrehsicherung auf einem großen Durchmesser ausgeführt, der größer als der Durchmesser des Zylinders 10 ist. Daraus ergibt sich eine große Genauigkeit. Da die Verdrehsicherung außerhalb des druckmittel- oder produktführenden Bereichs angeordnet ist, entfallen zusätzliche Dichtungsmaßnahmen.

Unter der Haube 9 kann eine Sensorik vorgesehen sein, mit der die Stellung des Schließkörpers 7 detektierbar ist. Diese Sensorik kann beispielsweise einen ersten Stellungssensor 27 und einen zweiten Stellungssensor 28 umfassen. Die Stellungssensoren 27 und 28 sind an gegenüberliegenden Enden der Verschiebungsstrecke des Schließkörpers angeordnet. Sie können als Näherungsinitiatoren ausgeführt sein, die mit einem passenden und am Zylinder 10 montierten Target zusammenwirken. Es kann ein dritter Stellungssensor zwischen erstem und zweitem Stellungssensor 27 und 28 vorgesehen sein, mit der eine Zwischenstellung des Schließkörpers nachweisbar ist. Die Zwischenstellung kann durch entsprechende beidseitige Druckmittelbeaufschlagung des Kolbens erreicht werden. Eine Zwischenstellung kann beim Reinigen des Ventils von Vorteil sein, um die Reinigungsmittelströmung gezielt zu stören, beispielsweise die Wirbelbildung anzuregen. Diese Wirbel können dann die Beseitigung von Ablagerungen verbessern.

Die gegen Verdrehung gesicherte Ausführung erlaubt es, eine Stirnseite 25 des Schließkörpers 7 an eine Innenwandung 26 des zweiten Anschlusses 4 angepasst auszuführen, beispielsweise fluchtend, so dass die Stirnseite 25 in Schließstellung des Schließkörpers 7 einen Wandabschnitt der Innenwandung 26 bildet. Dies verbessert die Reinigbarkeit der Ventilvorrichtung. Wenn der zweite Anschluss 4 beispielsweise leitungsförmig gestaltet ist, ergibt sich eine mit einem Molch reinigbare Anordnung. Soweit durch die zur Innenwandung 26 bündig abschließende Ausgestaltung der Stirnseite 25 Strömungsschatten am Schließkörper 7 entstehen, kann wenigstens eine Querbohrung im Schließkörper 7 vorgesehen sein, die den Bereich des Strömungsschattens mit einem strömungsberührten Teil des Schließkörpers 7, beispielsweise der Stirnseite 25, verbindet.

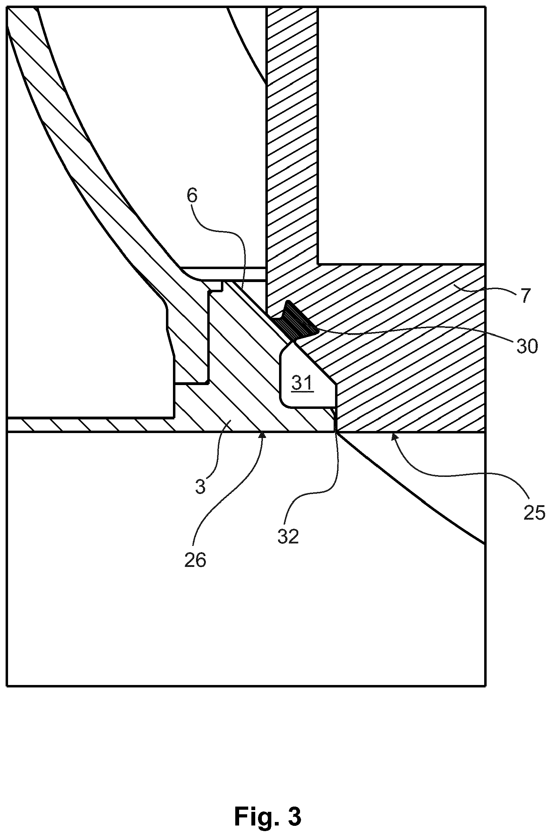

In Fig. 3 ist das Detail X der Fig. 1 und 2 vergrößert dargestellt. Gezeigt ist das Detail X in der Schließstellung nach Fig. 2.

Eine Dichtung 30, die am Schließkörper 7 in einer Nut aufgenommen ist und diese ausfüllt, berührt den Ventilsitz 6 und dichtet Ventilsitz 6 gegen Schließkörper 7 fluidfest ab. Dichtung 30 und Ventilsitz 6 können halbaxial ausgeführt sein, was die Zentrierung des Schließkörper 7 im Ventilsitz 6 verbessert.

Zwischen zweitem Gehäuseteil 3 und Schließkörper 7 ist ein den Schließkörper 7 umgebender Ringkanal 31 angeordnet. Er liegt vorzugsweise in einer Ebene, auf die die Hubachse A senkrecht steht, wobei eine Symmetrieachse des drehsymmetrischen Rings mit der Hubachse A zusammenfällt.

Der Kontakt zwischen Ventilsitz 6 und Schließkörper 7 dichtet den Ringkanal in Fluidströmungsrichtung zum ersten Anschluss 2 hin ab. Die Dichtung 30 kann unmittelbar an den Ringkanal 31 angrenzend angeordnet sein.

In Fluidströmungsrichtung vom Ringkanal 31 zum zweiten Anschluss 4 hin ist zwischen zweitem Gehäuseteil 3 und Schließkörper 7 ein Drosselspalt 32 ausgebildet. Der Drosselspalt 32 erlaubt eine geringfügige Strömung aus dem Ringkanal 31 durch den Drosselspalt 32 in Richtung des zweiten Anschlusses 4. Die Führung und Lagerung des Schließkörpers 7 in erstem und zweitem Gleitlager 22 und 23 auf weitem Durchmesser sowie die Verdrehsicherung ermöglichen es, den Drosselspalt 32 entlang eines vollständigen Umfangs des Schließkörpers 7 auszuführen und eine Weite dieses Drosselspaltes an die Bedürfnisse anzupassen.

In den Ringkanal 31 mündet wenigstens ein Einlass 33, vorzugsweise sind mehrere Einlässe in Umfangsrichtung entlang des Ringkanals 31 verteilt, vorteilhaft in äquidistanter Anordnung. Es hat sich gezeigt, dass mit vier äquidistant verteilten Einlässen ein besonders gutes Ergebnis erreichbar ist. Die Einlässe sind in Fig. 1 in Offenstellung der Ventilvorrichtung gut zu erkennen. Durch den Einlass 33 kann ein Medium eingelassen werden, das durch den Drosselspalt 32 entweicht. Das Medium kann beispielsweise ein Sperrgas sein, welches verhindert, dass sich im Ringkanal 31 und Drosselspalt 32 Verunreinigungen festsetzen. Alternativ oder in einem zweiten Verfahrensschritt kann das Medium ein Reinigungsmittel sein.

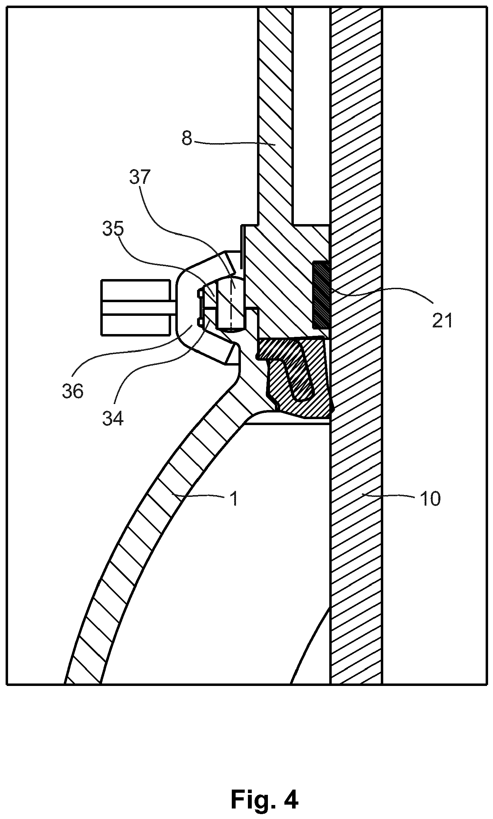

In Fig. 4 ist das Detail Y der Fig. 1 und 2 vergrößert dargestellt.

Das erste Gehäuseteil 1 weist einen ersten Flansch 34 auf, welcher mit einem zweiten Flansch 35 zusammengebracht wird, welcher am zweiten Gehäuseteil 8 angeordnet ist. Ein Klammer 36 presst die Flansche 34 und 35 lösbar gegeneinander. Damit die Flansch 34 und 35 nicht gegeneinander verdreht werden können, ist ein Bolzen 37 vorgesehen, der mit jedem der beiden Flansche 34 und 35 in Eingriff steht. Dies ist vorteilhaft bei einer nicht rotationssymmetrischen Stirnseite 25 des Schließkörpers 7, um den Schließkörper 7 zu orientieren. Diese Ausführung wirkt mit der oben beschriebenen Verdrehsicherung mit Führungsstange 23 und Platte 24 zusammen und vertieft deren Vorteile.

### Bezugszeichenliste

- 1: erstes Gehäuseteil
- 2: erster Anschluss
- 3: zweites Gehäuseteil
- 4: zweiter Anschluss
- 5: Durchlass
- 6: Ventilsitz
- 7: Schließkörper
- 8: drittes Gehäuseteil
- 9: Haube
- 10: Zylinder
- 11: Lauffläche
- 12: Kolben
- 13: erster Druckraum
- 14: zweiter Druckraum
- 15: Deckel
- 16: innere Hohlstange
- 17: Luftkanal
- 18: Luftspalt
- 19: äußere Hohlstange
- 20: Bohrung
- 21: erstes Gleitlager
- 22: zweites Gleitlager
- 23: Führungsstange
- 24: Platte
- 25: Stirnseite
- 26: Innenwandung
- 27: erster Stellungssensor
- 28: zweiter Stellungssensor
- 29: Elektronik
- 30: Dichtung
- 31: Ringkanal
- 32: Drosselspalt
- 33: Einlass
- 34: erster Flansch
- 35: zweiter Flansch
- 36: Klammer
- 37: Bolzen

- A: Hubachse
- x: Detail
- y: Detail

## Patentansprüche

1. Ventilvorrichtung, insbesondere Hubventilvorrichtung, mit einem Gehäuse, einem Ventilsitz (6), einem bewegbaren Schließkörper (7), welcher in einer Öffnungsbewegung in eine Offenstellung und in einer Schließbewegung in eine Schließstellung bringbar ist, in welcher Schließstellung der Schließkörper (7) und der Ventilsitz (6) in dichtendem Kontakt stehen, und mit einem druckmittelbeaufschlagbaren Kolben (12), der in einem Zylinder (10) aufgenommen ist, wobei der Zylinder (10) ein Teil des Schließkörpers (12) ist, **dadurch gekennzeichnet, dass** sich der Schließkörper (7) durch ein Gehäuseteil (8) erstreckt und ein erstes Gleitlager (21) und ein zweites Gleitlager (22) vorgesehen sind, die an gegenüberliegenden Enden des Gehäuseteils (8) angeordnet sind, und dass zwischen einem Gehäuseteil (3) und Schließkörper (7) ein den Schließkörper (7) umgebender Ringkanal (31) angeordnet ist, wobei vom Ringkanal (31) zu einem Anschluss (4) hin zwischen Gehäuseteil (3) und Schließkörper (7) ein Drosselspalt (32) ausgebildet ist.

2. Ventilvorrichtung nach Anspruch 1, **dadurch gekennzeichnet, dass** der Kolben (12) mit einer inneren Hohlstange (16) verbunden ist, die einen Luftkanal (17) beherbergt, der die innere Hohlstange (16) und den Kolben (12) durchsetzt und mit einem ersten Druckraum (13) verbunden ist, welcher von Kolben (12) und Zylinder (10) umgeben ist.

3. Ventilvorrichtung nach einem der vorhergehenden Ansprüche, **dadurch gekennzeichnet, dass** eine Dichtung (30), die am Schließkörper (7) in einer Nut aufgenommen ist und diese ausfüllt, und der Ventilsitz (6) halbaxial ausgeführt sind.

4. Ventilvorrichtung nach einem der vorhergehenden Ansprüche, **dadurch gekennzeichnet, dass** eine Führungsstange (23) vorgesehen ist, die sich parallel zu einer Hubachse (A) erstreckt und in einer Ebene, auf der die Hubachse (A) senkrecht steht, wenigstens abschnittsweise von einer am Schließkörper (7) vorgesehenen Platte (24) umschlossen ist.

5. Ventilvorrichtung nach einem der vorhergehenden Ansprüche, **dadurch gekennzeichnet, dass** ein erstes Gehäuseteil (1) einen ersten Flansch (34) aufweist, welcher mit einem an einem zweiten Gehäuseteil (3) vorgesehen zweiten Flansch (35) zusammengebracht ist, und ein Bolzen (37) vorgesehen ist, der mit jedem der beiden Flansche (34, 35) in Eingriff steht.

6. Ventilvorrichtung nach einem der vorhergehenden Ansprüche, **dadurch gekennzeichnet, dass** eine Stirnseite (25) des Schließkörpers (7) an eine Innenwandung (26) eines Anschlusses (4) fluchtend angepasst ausgeführt ist.

7. Ventilvorrichtung nach einem der vorhergehenden Ansprüche, **dadurch gekennzeichnet, dass** eine Sensorik einen ersten Stellungssensor (27) und einen zweiten Stellungssensor (28) umfasst, die an sich gegenüberliegenden Enden einer Verschiebungsstrecke des Schließkörpers (7) angeordnet sind.

## Claims

1. A valve device, in particular a lifting valve device, comprising a housing, a valve seat (6), a movable closing body (7) which can be brought into an open position in an opening movement and into a closed position in a closing movement, in which closed position the closing body (7) and the valve seat (6) are in sealing contact, and comprising a piston (12) to which pressure medium can be applied and which is received in a cylinder (10), wherein the cylinder (10) is a part of the closing body (12), **characterized in that** the closing body (7) extends through a housing part (8) and a first sliding bearing (21) and a second sliding bearing (22) are provided and are arranged at opposite ends of the housing part (8), and **in that** an annular channel (31) surrounding the closing body (7) is arranged between a housing part (3) and the closing body (7), wherein a choke gap (32) is formed from the annular channel (31) towards a connection (4) between the housing part (3) and the closing body (7).

2. The valve device according to claim 1, **characterized in that** the piston (12) is connected to an inner hollow rod (16) which houses an air channel (17) that passes through the inner hollow rod (16) and the piston (12) and is connected to a first pressure chamber (13) which is surrounded by the piston (12) and the cylinder (10).

3. The valve device according to one of the preceding claims, **characterized in that** a seal (30), which is received at the closing body (7) in a groove and fills same, and the valve seat (6) are designed to be semi-axial.

4. The valve device according to one of the preceding claims, **characterized in that** a guide rod (23) is provided which extends in parallel with a lift axis (A) and, in a plane to which the lift axis (A) is perpendicular, is enclosed at least in portions by a plate (24) provided on the closing body (7).

5. The valve device according to one of the preceding claims, **characterized in that** a first housing part (1) comprises a first flange (34) which is brought together with a second flange (35) provided on a second housing part (3), and a bolt (37) is provided which is engaged with each of the two flanges (34, 35).

6. The valve device according to one of the preceding claims, **characterized in that** an end face (25) of the closing body (7) is designed to be adapted so as to be flush with an inner wall (26) of the connection (4).

7. The valve device according to one of the preceding claims, **characterized in that** a sensor system comprises a first position sensor (27) and a second position sensor (28) which are arranged at opposite ends of a displacement path of the closing body (7).

## Revendications

1. Ensemble de soupape, en particulier ensemble de soupape de levage, comprenant un boîtier, un siège de soupape (6), un corps de fermeture (7) déplaçable, lequel peut être amené dans une position ouverte par un mouvement d'ouverture et dans une position fermée par un mouvement de fermeture, le corps de fermeture (7) et le siège de soupape (6) étant en contact d'étanchéité dans la position fermée, et comprenant un piston (12) apte à être sollicité par un fluide sous pression, lequel est reçu dans un cylindre (10), dans lequel le cylindre (10) fait partie du corps de fermeture (12), **caractérisé en ce que** le corps de fermeture (7) s'étend à travers une partie de boîtier (8) et **en ce qu'**il est prévu un premier palier lisse (21) et un deuxième palier lisse (22), lesquels sont agencés à des extrémités opposées de la partie de boîtier (8), et **en ce qu'**un canal annulaire (31) entourant le corps de fermeture (7) est agencé entre une partie de boîtier (3) et le corps de fermeture (7), dans lequel une fente d'étranglement (32) est formée entre la partie de boîtier (3) et le corps de fermeture (7), en partant du canal annulaire (31) jusqu'à un raccord (4).

2. Ensemble de soupape selon la revendication 1, **caractérisé en ce que** le piston (12) est relié à une tige creuse interne (16) contenant un canal d'air (17), lequel traverse la tige creuse interne (16) et le piston (12) et est relié à un premier espace de pression (13), lequel est entouré par le piston (12) et le cylindre (10).

3. Ensemble de soupape selon l'une des revendications précédentes, **caractérisé en ce qu'**un joint d'étanchéité (30) reçu dans une rainure sur le corps de fermeture (7) et remplissant celle-ci, ainsi que le siège de soupape (6) sont conçus de façon semi-axiale.

4. Ensemble de soupape selon l'une des revendications précédentes, **caractérisé en ce qu'**il est prévu une tige de guidage (23), laquelle s'étend parallèlement à un axe de levage (A) et est entourée au moins partiellement par une plaque (24) prévue sur le corps de fermeture (7), dans un plan sur lequel l'axe de levage (A) se tient verticalement.

5. Ensemble de soupape selon l'une des revendications précédentes, **caractérisé en ce qu'**une première partie de boîtier (1) présente une première bride (34), laquelle est réunie avec une deuxième bride (35) prévue sur une deuxième partie de boîtier (3), et il est prévu un boulon (37) engagé avec chacune des deux brides (34, 35).

6. Ensemble de soupape selon l'une des revendications précédentes, **caractérisé en ce qu'**un côté frontal (25) du corps de fermeture (7) est conçu de manière à s'adapter de façon affleurante à une paroi intérieure (26) d'un raccord (4).

7. Ensemble de soupape selon l'une des revendications précédentes, **caractérisé en ce qu'**un système de capteurs comporte un premier capteur de position (27) et un deuxième capteur de position (28), lesquels sont agencés à des extrémités opposées d'un trajet de déplacement du corps de fermeture (7).
